# EUROPEAN PATENT APPLICATION

(11) **EP 4 362 436 A1**
(43) Date of publication of application: **01.05.2024**
(21) Application number: 23748418.3
(22) Date of filing: 02.08.2023
(51) Int. Cl.: H04M 1/02, H04M 1/03, H05K 7/20, H01Q 1/24, H05K 5/06, H04R 9/02, G06F 1/20, G06F 1/16, H04R 1/28

(54) **ELECTRONIC DEVICE COMPRISING STRUCTURE FOR INSULATING HEAT EMITTED FROM SPEAKER**

(30) Priority: 16.09.2022 KR 20220117144; 04.10.2022 KR 20220126121
(71) Applicant: Samsung Electronics Co., Ltd., Suwon-si, Gyeonggi-do 16677 (KR)
(72) Inventor: KWON, Ohhyuck, Suwon-si Gyeonggi-do 16677 (KR); KIM, Younju, Suwon-si Gyeonggi-do 16677 (KR); PARK, Hanbom, Suwon-si Gyeonggi-do 16677 (KR); SUNG, Jungoh, Suwon-si Gyeonggi-do 16677 (KR)
(74) Representative: HGF
(86) International application number: PCT/KR2023/011309
(87) International publication number: WO 2024/058424

(57) **Abstract**

An electronic device includes a display, a housing including a first surface and a second surface, a speaker including one surface facing the first surface and the other surface facing the second surface, an encloser including a radiating portion facing the other surface of the speaker and configured to accommodate the speaker, a first insulating member in contact with a part of the radiating portion, and a supporting member including a first portion in contact with the first radiating member and a second portion in contact with the other surface of the speaker and disposed between the other surface of the speaker and the radiating portion.

## Description

### [Technical Field]

The present disclosure relate to an electronic device having a structure for insulating heat emitted from a speaker.

### [Background Art]

An electronic device may include one or more electronic components to provide various functions to a user. For example, the electronic device may include a speaker that transmits audio to the outside of the electronic device to provide auditory information to the user. As the speaker operates in the electronic device, heat may be generated from the speaker.

### [Disclosure]

### [Technical Solution]

An electronic device according to an embodiment includes a display. According to an embodiment, the electronic device includes a housing including a first surface supporting the display and a second surface opposite to the first surface. According to an embodiment, the electronic device includes a speaker including one surface facing the first surface and the other surface facing the second surface and configured to output audio toward the one surface. According to an embodiment, the electronic device includes an encloser including a radiating portion facing the other surface of the speaker and configured to accommodate the speaker. According to an embodiment, the electronic device includes a first insulating member in contact with a part of the radiating portion to reduce heat transferred from the speaker to the radiating portion when the audio is output. According to an embodiment, the electronic device includes a supporting member including a first portion in contact with the first insulating member and a second portion in contact with the other surface of the speaker and disposed between the other surface of the speaker and the radiating portion.

An electronic device according to an embodiment includes a display. According to an embodiment, the electronic device includes a housing including a first surface supporting the display and a second surface opposite to the first surface. According to an embodiment, the electronic device includes a speaker including one surface facing the first surface and the other surface facing the second surface and configured to output audio toward the one surface. According to an embodiment, the electronic device includes a radiating member spaced apart from the other surface of the speaker and at least part of the radiating member is disposed between the second surface and the other surface of the speaker. According to an embodiment, the electronic device includes a supporting member disposed on the other surface of the speaker and including a resonance hole configured to resonate audio output from the speaker. According to an embodiment, the electronic device includes a first insulating member facing a part of the radiating member and disposed on the supporting member to reduce heat transferred from the speaker to the radiating member when the audio is output. According to an embodiment, the electronic device includes a second insulating member disposed between the second surface and the radiating member to reduce heat transferred from the speaker to the second surface when the audio is output.

### [Description of the Drawings]

FIG. 1 is a block diagram illustrating an electronic device in a network environment according to various embodiments;
FIG. 2 is a view illustrating an example electronic device according to an embodiment;
FIG. 3 is an exploded perspective view of an example electronic device according to an embodiment;
FIG. 4A is a perspective view of an example electronic device according to an embodiment;
FIG. 4B is an exploded perspective view of an example electronic device according to an embodiment; and
FIG. 4C is a cross-sectional view illustrating an example of an electronic device taken along line A-A' of FIG. 4A, according to an embodiment.

### [Mode for Invention]

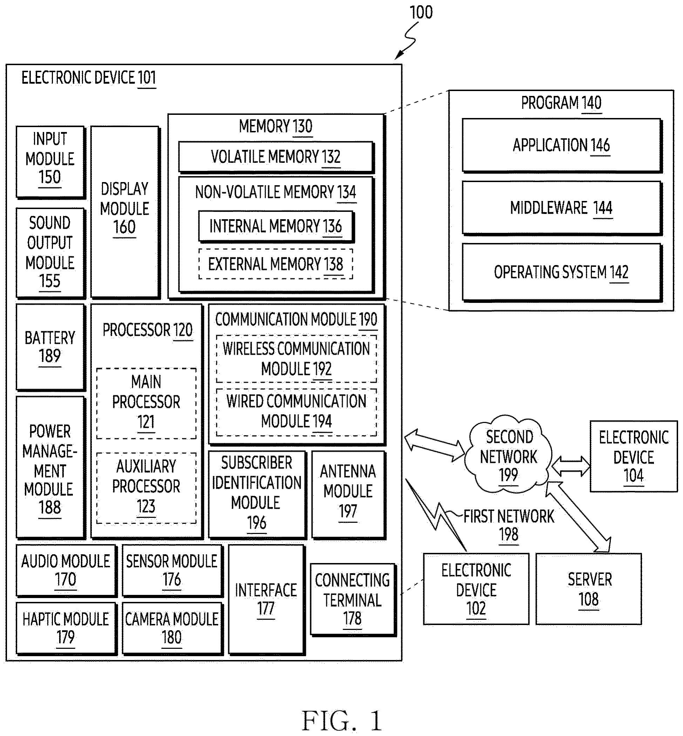

FIG. 1 is a block diagram of an electronic device in a network environment according to an example of the disclosure.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an example, the electronic device 101 may communicate with the electronic device 104 via the server 108. According to an example, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an example, as at least part of the data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an example, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an example, the auxiliary processor 123 (e.g., an image signal processor or a communication processor) may be implemented as part of another component (e.g., the camera module 180 or the communication module 190) functionally related to the auxiliary processor 123. According to an example, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an example, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an example, the display module 160 may include a touch sensor adapted to detect a touch, or a pressure sensor adapted to measure the intensity of force incurred by the touch.

The audio module 170 may convert a sound into an electrical signal and vice versa. According to an example, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an example, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an example, the interface 177 may include, for example, a high-definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an example, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an example, the haptic module 179 may include, for example, a motor, a piezoelectric element, or an electric stimulator.

The camera module 180 may capture a still image or moving images. According to an example, the camera module 180 may include one or more lenses, image sensors, image signal processors, or flashes.

The power management module 188 may manage power supplied to the electronic device 101. According to an example, the power management module 188 may be implemented as at least part of, for example, a power management integrated circuit (PMIC).

The battery 189 may supply power to at least one component of the electronic device 101. According to an example, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an example, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mm Wave band) to address, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an example, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an example, the antenna module 197 may include an antenna including a radiating element including a conductive material or a conductive pattern formed in or on a substrate (e.g., a printed circuit board (PCB)). According to an example, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an example, another component (e.g., a radio frequency integrated circuit (RFIC)) other than the radiating element may be additionally formed as part of the antenna module 197.

According to various embodiments, the antenna module 197 may form a mmWave antenna module. According to an example, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an example, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another example of the disclosure, the external electronic device 104 may include an internet-of-things (IoT) device. The server 108 may be an intelligent server using machine learning and/or a neural network. According to an example, the external electronic device 104 or the server 108 may be included in the second network 199. The electronic device 101 may be applied to intelligent services (e.g., smart home, smart city, smart car, or healthcare) based on 5G communication technology or IoT-related technology.

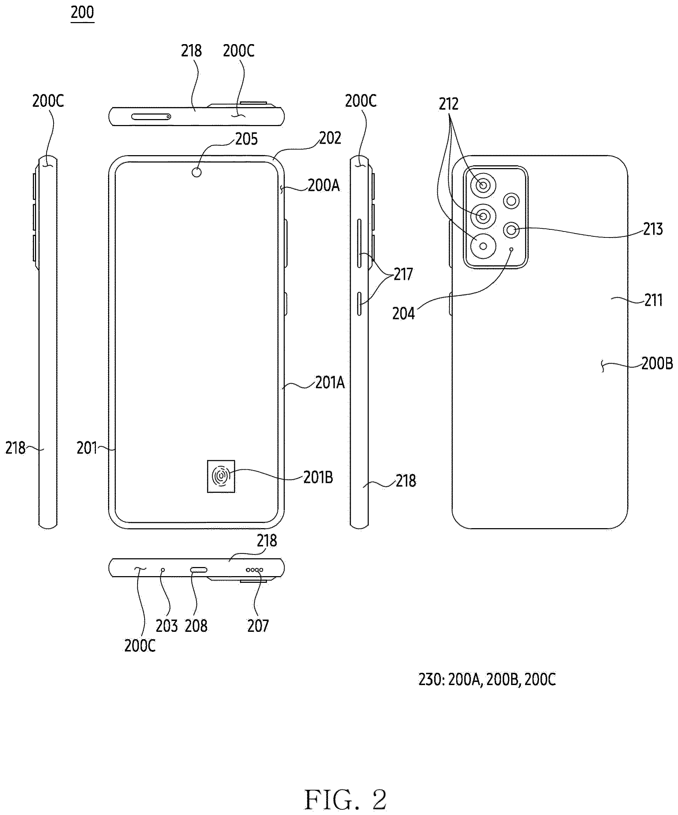

FIG. 2 is a diagram illustrating an electronic device according to an embodiment.

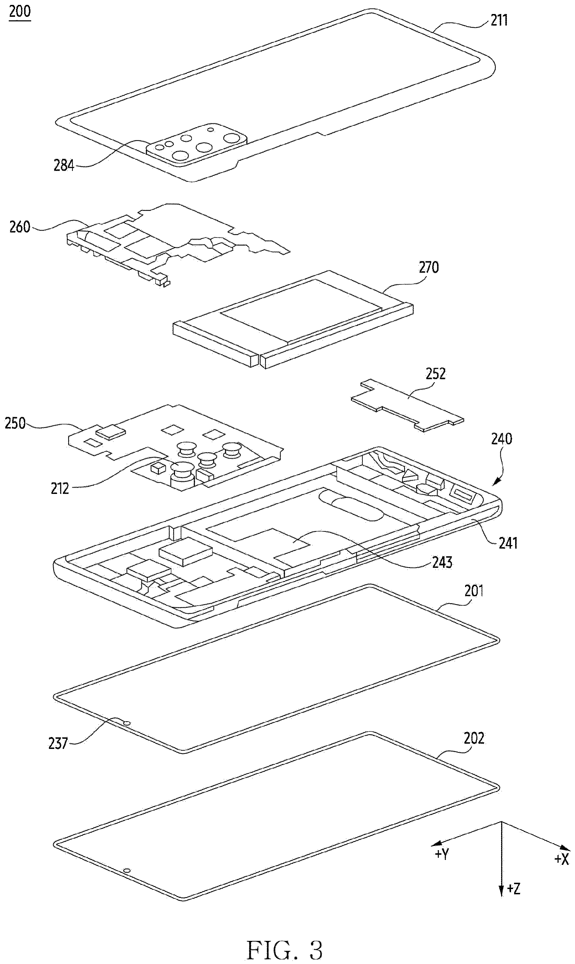

Referring to FIG. 2, an electronic device 200 according to an embodiment may include a housing forming an appearance of the electronic device 200. For example, the housing may form an external appearance of the electronic device 200. For example, the housing may include a first surface (or front surface) 200A, a second surface (or rear surface) 200B, and a third surface (or side surface) 200C surrounding a space between the first surface 200A and the second surface 200B. In an embodiment, the housing may refer to a structure (e.g., frame structure 240 of FIG. 3) forming at least a portion of the first surface 200A, the second surface 200B, and/or the third surface 200C.

The electronic device 200 according to an embodiment may include a substantially transparent front plate 202. In an embodiment, the front plate 202 may form at least a portion of the first surface 200A. In an embodiment, the front plate 202 may include, for example, a glass plate including various coating layers or a polymer plate, but the disclosure is not limited thereto.

The electronic device 200 according to an embodiment may include a substantially opaque rear plate 211. In an embodiment, the rear plate 211 may form at least a portion of the second surface 200B. In an embodiment, the rear plate 211 may be formed of coated or colored glass, ceramic, polymer, metal (e.g., aluminum, stainless steel (STS), or magnesium), or a combination of at least two of the materials.

The electronic device 200 according to an embodiment may include a side bezel structure (or side member) 218. In an embodiment, the side bezel structure 218 may be coupled to the front plate 202 and/or the rear plate 211 to form at least a portion of the third surface 200C of the electronic device 200. For example, the side bezel structure 218 may form the entirety of the third surface 200C of the electronic device 200, and as another example, the side bezel structure 218 may form the third surface 200C of the electronic device 200 together with the front plate 202 and/or the rear plate 211. For example, the third surface 200C may be formed at least partially by at least one of the front plate 202 and the rear plate 211 together with the side bezel structure 218.

Unlike the illustrated embodiment, in the case that the third surface 200C of the electronic device 200 is partially formed by the front plate 202 and/or the rear plate 211, the front plate 202 and/or the rear plate 211 may include a region that seamlessly extends, bending from its periphery toward the rear plate 211 and/or the front plate 202. The extended region of the front plate 202 and/or the rear plate 211 may be positioned, for example, at both ends of a long edge of the electronic device 200, but the disclosure is not limited to the above-described example.

In an embodiment, the side bezel structure 218 may include (e.g., be formed of) a metal and/or a polymer. In an embodiment, the rear plate 211 and the side bezel structure 218 may be integrally formed and may include (e.g., be formed of) the same material (e.g., a metal material such as aluminum), but the disclosure is not limited thereto. For example, the rear plate 211 and the side bezel structure 218 may be formed in separate configuration and/or may include different materials.

In an embodiment, the electronic device 200 may include at least one of a display 201, an audio module (203, 203, 207), a sensor module (not shown), a camera module (205, 212, 213), a key input device 217, a light emitting device (not shown), and/or a connector hole 208. In another embodiment, the electronic device 200 may omit at least one of these components (e.g., a key input device 217 or a light emitting device (not shown)), or may further include another component.

In an embodiment, the display 201 (e.g., a display module 160 of FIG. 1) may be visually exposed through a corresponding portion of the front plate 202 to the outside. For example, at least a portion of the display 201 may be visible through the front plate 202 forming the first surface 200A. In an embodiment, the display 201 may be disposed on the rear surface of the front plate 202 and may thus be visible through the front plate 202.

In an embodiment, the appearance of the display 201 may be formed substantially the same as the appearance of the front plate 202 adjacent to the display 201 (e.g., a shape and area of the display 201 and the front plate 202 may be substantially the same). In an embodiment, in order to expand the area in which the display 201 is visually exposed, a distance between the outer periphery of the display 201 and the outer periphery of the front plate 202 may be formed to be generally the same.

In an embodiment, the display 201 (or the first surface 200A of the electronic device 200) may include a screen display area 201A. In an embodiment, the display 201 may provide visual information to a user through the screen display area 201A. In the embodiment illustrated, when the first surface 200A is viewed from the front, it is illustrated that the screen display area 201A is spaced apart from the outer periphery of the first surface 200A and is located inside the first surface 200A, but the disclosure is not limited thereto. In another embodiment, when the first surface 200A is viewed from the front, at least a portion of the periphery of the screen display area 201A may substantially coincide with the periphery of the first surface 200A (or the front plate 202) For example, a portion of the display 201 visible through the front plate 202 may correspond to the screen display area 201A.

In an embodiment, the screen display area 201A may include a sensing area 201B configured to obtain biometric information of a user. Here, the meaning of the phrase "the screen display area 201A including a sensing area 201B" may be understood to imply that at least a portion of the sensing area 201B may be overlapped on the screen display area 201A. For example, the sensing area 201B may refer to an area in which visual information may be displayed by the display 201, like other areas of the screen display area 201A, and additionally, biometric information (e.g., fingerprint, iris image, and the like) of a user may be obtained. In another embodiment, the sensing area 201B may be formed in the key input device 217.

In an embodiment, the display 201 may include an area in which a first camera module 205 (e.g., a camera module 180 of FIG. 1) is located. In an embodiment, an opening may be formed in the area of the display 201, and the first camera module 205 (e.g., a punch hole camera) may be at least partially disposed in the opening to face the first surface 200A. In such a circumstance, the screen display area 201A may be formed to surround at least a portion of the periphery of the opening. In another embodiment, the first camera module 205 (e.g., an under display camera (UDC)) may be disposed under the display 201 to overlap the area of the display 201. In such a case, the display 201 may provide visual information to the user through the area, and additionally, the first camera module 205 may obtain an image corresponding to a direction facing the first surface 200A through the area of the display 201.

In an embodiment, the display 201 may be coupled to or disposed adjacent to a touch sensing circuit, a pressure sensor capable of measuring an intensity (pressure) of touch, and/or a digitizer detecting a magnetic-field type of stylus pen.

In an embodiment, the audio modules (203, 204, 207) (e.g., an audio module 170 of FIG. 1) may include microphone holes 203 and 204, and a speaker hole 207.

In an embodiment, the microphone holes 203 and 204 may include at least a first microphone hole 203 formed in a partial area of the third surface 200C and a second microphone hole 204 formed in a partial area of the second surface 200B. A microphone (not shown) for obtaining sound from outside the electronic device 200 may be disposed inside the microphone holes 203 and 204. The microphone may include a plurality of microphones to detect a direction of the sound.

In an embodiment, the second microphone hole 204 formed in a partial area of the second surface 200B may be disposed adjacent to the camera modules 205, 212 and 213. For example, the second microphone hole 204 may obtain sound according to operation of the camera modules 205, 212, and 213. However, the disclosure is not limited thereto.

In an embodiment, the speaker hole 207 may include an external speaker hole 207 and a receiver hole (not shown) for use in phone calls. The external speaker hole 207 may be formed on a portion of the third surface 200C of the electronic device 200. In another embodiment, the external speaker hole 207 may be implemented as a single hole together with the microphone hole 203. Although not illustrated, a receiver hole (not shown) for use in phone calls may be formed on another portion of the third surface 200C. For example, the receiver hole for use in phone calls may be formed on the opposite side of the external speaker hole 207 in the third surface 200C. For example, on the basis of the illustration of FIG. 2, the external speaker hole 207 may be formed on the third surface 200C corresponding to the lowermost end of the electronic device 200, and the receiver hole for phone calling may be formed on the third surface 200C corresponding to the uppermost end of the electronic device 200. However, the disclosure is not limited thereto, and in another embodiment, the receiver hole for phone calling may be formed in a position other than the third surface 200C. For example, the receiver hole for phone calling may be formed in a space spaced apart between the front plate 202 (or the display 201) and the side bezel structure 218.

In an embodiment, the electronic device 200 may include at least one speaker (not shown) configured to output audio to the outside of the housing through the external speaker hole 207 and/or the receiver hole (not shown) for use in phone calls.

In an embodiment, the sensor module (not shown) (e.g., a sensor module 176 of FIG. 1) may generate an electrical signal or a data value corresponding to an operating status within the electronic device 200 or an external environmental condition (e.g., acceleration, temperature, and humidity). For example, the sensor module may include at least one of a proximity sensor, an HRM sensor, a fingerprint sensor, a gesture sensor, a gyro sensor, a pressure sensor, a magnetic sensor, an acceleration sensor, a grip sensor, a color sensor, an infrared (IR) sensor, a biometric sensor, a temperature sensor, a humidity sensor, or an illumination sensor.

In an embodiment, the camera modules (205, 212, 213) (e.g., a camera module 180 of FIG. 1) may include a first camera module 205 disposed to face the first surface 200A of the electronic device 200, a second camera module 212 disposed to face the second surface 200B thereof, and a flash 213.

In an embodiment, the second camera module 212 may include a plurality of cameras (e.g., a dual camera, a triple camera, or a quad camera). However, the second camera module 212 is not limited to essentially including a plurality of cameras, and may include a single camera.

In an embodiment, the first camera module 205 and the second camera module 212 may include one or more lenses, an image sensor, and/or an image signal processor.

In an embodiment, the flash 213 may include, for example, a light emitting diode or a xenon lamp. In another embodiment, two or more lenses (e.g., an infrared camera, a wide-angle lens and a telephoto lens) and image sensors may be disposed on one surface of the electronic device 200.

In an embodiment, the key input device 217 (e.g., an input module 150 of FIG. 1) may be disposed on the third surface 200C of the electronic device 200. In another embodiment, the electronic device 200 may not include some or the entirety of the key input device 217 (e.g., the electronic device 200 may not include one or more of the key input devices of the key input device 217), and the key input devices of the key input device 217 not included therein may be implemented on the display 201 in another form such as a soft key.

In an embodiment, the connector hole 208 may be formed on the third surface 200C of the electronic device 200 so that a connector for an external device may be received therein. A connection terminal (e.g., a connection terminal 178 of FIG. 1) electrically connected to the connector of the external device may be disposed in the connector hole 208. The electronic device 200 according to an embodiment may include an interface module (e.g., an interface 177 of FIG. 1) for processing electrical signals transmitted/received via the connection terminal.

In an embodiment, the electronic device 200 may include a light emitting device (not shown). For example, the light emitting device (not shown) may be disposed on the first surface 200A of the housing. The light emitting device (not shown) may provide state information of the electronic device 200 in the form of light. For example, the light emitting device (not shown) may display a specific color of light to represent a specific state of the electronic device 200. For example, the light emitting device (not shown) may display a red light to represent a low battery state of the electronic device 200. In another embodiment, the light emitting device (not shown) may provide a light source in association with operation of the first camera module 205. For example, the light emitting device (not shown) may display a specific color of light to indicate that the first camera module 205 is in operation. For example, the light emitting device (not shown) may include an LED, an IR LED, and/or a xenon lamp.

FIG. 3 is an exploded perspective view of an example electronic device according to an embodiment.

Hereinafter, the description of configurations having the same reference numerals as those of the above-described configuration will be omitted for convenience of description and conciseness.

Referring to FIG. 3, the electronic device 200 according to an embodiment may include a frame structure 240, a first printed circuit board 250, a second printed circuit board 252, a cover plate 260, and a battery 270.

In an embodiment, the frame structure 240 may include a sidewall 241 forming an appearance (e.g., the third surface 200C of FIG. 2) of the electronic device 200 and a supporting portion 243 extending inward from the sidewall 241. In an embodiment, the frame structure 240 may be disposed between the display 201 and the rear plate 211. In an embodiment, the sidewall 241 of the frame structure 240 may surround a space between the rear plate 211 and the front plate 202 (and/or the display 201), and the supporting portion 243 of the frame structure 240 may extend from the sidewall 241 within the space.

In an embodiment, the frame structure 240 may support or accommodate other components included in the electronic device 200. For example, the display 201 may be disposed on one surface of the frame structure 240 facing one direction (e.g., +z direction), and the display 201 may be supported by the supporting portion 243 of the frame structure 240. As another example, the first printed circuit board 250, the second printed circuit board 252, the battery 270, and the second camera module 212 may be arranged on the other surface of the frame structure 240 facing an opposite direction (e.g., -z direction) to the one direction. The first printed circuit board 250, the second printed circuit board 252, the battery 270, and the second camera module 212 may be seated in a recess defined by the sidewall 241 of the frame structure 240 and/or the supporting portion 243, respectively.

In an embodiment, the first printed circuit board 250, the second printed circuit board 252, and the battery 270 may be coupled to the frame structure 240, respectively. For example, the first printed circuit board 250 and the second printed circuit board 252 may be fixedly disposed onto the frame structure 240 through a coupling member such as a screw. For example, the battery 270 may be fixedly disposed onto the frame structure 240 through an adhesive member (e.g., a double-sided tape). However, the disclosure is not limited to the above-described example.

In an embodiment, the cover plate 260 may be disposed between the first printed circuit board 250 and the rear plate 211. In an embodiment, the cover plate 260 may be disposed onto the first printed circuit board 250. For example, the cover plate 260 may be disposed onto a surface facing -z direction of the first printed circuit board 250.

In an embodiment, the cover plate 260 may at least partially overlap the first printed circuit board 250 with respect to z axis. In an embodiment, the cover plate 260 may cover at least a partial area of the first printed circuit board 250. With this configuration, the cover plate 260 may protect the first printed circuit board 250 from any physical impacts or may prevent a connector (e.g., a connector 234 of FIG. 3) coupled to the first printed circuit board 250 from separating from the first printed circuit board 250.

In an embodiment, the cover plate 260 may be fixedly disposed onto the first printed circuit board 250 through a coupling member (e.g., a screw), or may be coupled to the frame structure 240 together with the first printed circuit board 250 through the coupling member.

In an embodiment, the display 201 may be disposed between the frame structure 240 and the front plate 202. For example, the front plate 202 may be disposed on one side (e.g., +z direction) of the display 201, and the frame structure 240 may be disposed on the other side (e.g., -z direction).

In an embodiment, the front plate 202 may be coupled to the display 201. For example, the front plate 202 and the display 201 may be bonded to each other, using an optics-used adhesive member (e.g., optically clear adhesive (OCA) or optically clear resin (OCR)) interposed therebetween.

In an embodiment, the front plate 202 may be coupled to the frame structure 240. For example, the front plate 202 may include an outer portion extending out of the display 201 when viewed in z-axis direction, and may be bonded to the frame structure 240 with an adhesive member (e.g., a double-sided tape) disposed between the outer portion of the front plate 202 and the frame structure 240 (e.g., the sidewall 241). However, the disclosure is not limited to the above-described example.

In an embodiment, a processor (e.g., the processor 120 of FIG. 1), a memory (e.g., the memory 130 of FIG. 1), and/or an interface (e.g., the interface 177 of FIG. 1) may be mounted onto the first printed circuit board 250 and/or the second printed circuit board 252. The processor may include, for example, one or more of a central processing unit, an application processor, a graphic processing unit, an image signal processor, a sensor hub processor, or a communication processor. The memory may include, for example, a volatile memory and/or a non-volatile memory. The interface may include, for example, a high-definition multimedia interface (HDMI), a universal serial bus (USB) interface, an SD card interface, and/or an audio interface. The interface may electrically or physically connect the electronic device 200 to an external electronic device and may include a USB connector, an SD card/MMC connector, or an audio connector. In an embodiment, the first printed circuit board 250 and the second printed circuit board 252 may be operatively or electrically connected to each other through a connection member (e.g., a flexible printed circuit board).

In an embodiment, the battery 270 (e.g., the battery 189 of FIG. 1) may supply power to at least one component of the electronic device 200. For example, the battery 270 may include a rechargeable secondary battery or a fuel cell. At least part of the battery 270 may be disposed on substantially the same plane as the first printed circuit board 250 and/or the second printed circuit board 252.

The electronic device 200 according to an embodiment may include an antenna module (not shown) (e.g., the antenna module 197 of FIG. 1). In an embodiment, the antenna module may be disposed between the rear plate 211 and the battery 270. The antenna module may include, for example, a near-field communication (NFC) antenna, a wireless charging antenna, and/or a magnetic secure transmission (MST) antenna. The antenna module may, for example, perform short-range communication with an external device or wirelessly transmit/receive electric power to/from the external device.

In an embodiment, the first camera module 205 (e.g., the front camera) may be disposed in at least a portion (e.g., the supporting portion 243) of the frame structure 240 such that its lens may receive external light through a partial area (e.g., a camera area 237) of the front plate 202 (e.g., the front surface 200A of FIG. 2).

In an embodiment, the second camera module 212 (e.g., a rear camera) may be disposed between the frame structure 240 and the rear plate 211. In an embodiment, the second camera module 212 may be electrically connected to the first printed circuit board 250 with a connection member (e.g., a connector). In an embodiment, the second camera module 212 may be disposed such that the lens may receive external light through the camera area 284 of the rear plate 211 of the electronic device 200. For example, at least a part of the camera area 284 may be transparent.

In an embodiment, the camera area 284 may be formed on a surface (e.g., the rear surface 200B of FIG. 2) of the rear plate 211. In an embodiment, the camera area 284 may be formed to be at least partially transparent so that external light may be incident on the lens of the second camera module 212. In an embodiment, at least a portion of the camera area 284 may protrude from the surface of the rear plate 211 to a predetermined height. However, the disclosure is not limited thereto, and in another embodiment, the camera area 284 may form substantially the same plane as the surface of the rear plate 211.

In an embodiment, the housing of the electronic device 200 may refer to a configuration or a structure that forms at least a portion of the appearance of the electronic device 200. In this context, at least some of the front plate 202, the frame structure 240, and/or the rear plate 211 forming the exterior of the electronic device 200 may be referred to as a housing of the electronic device 200.

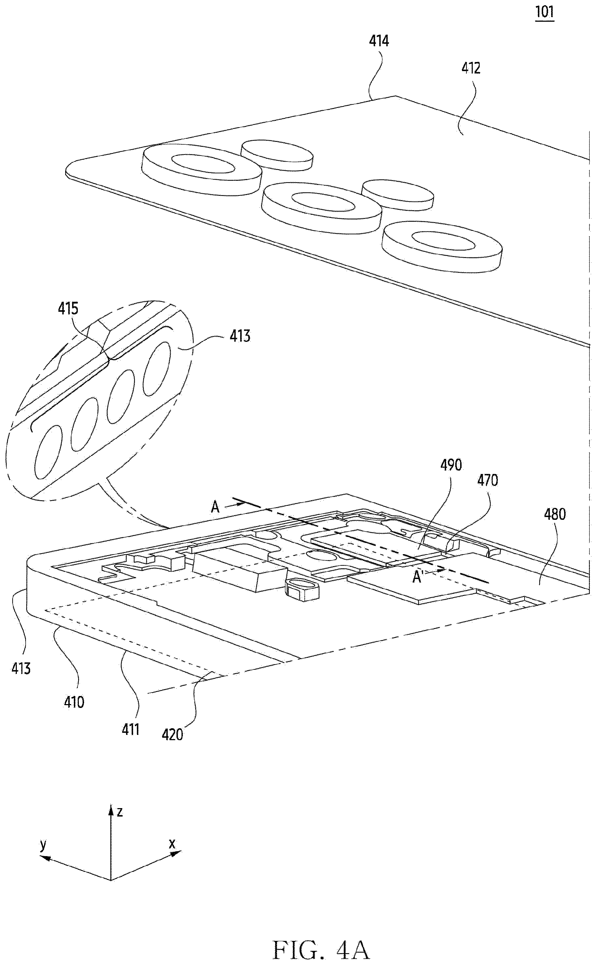

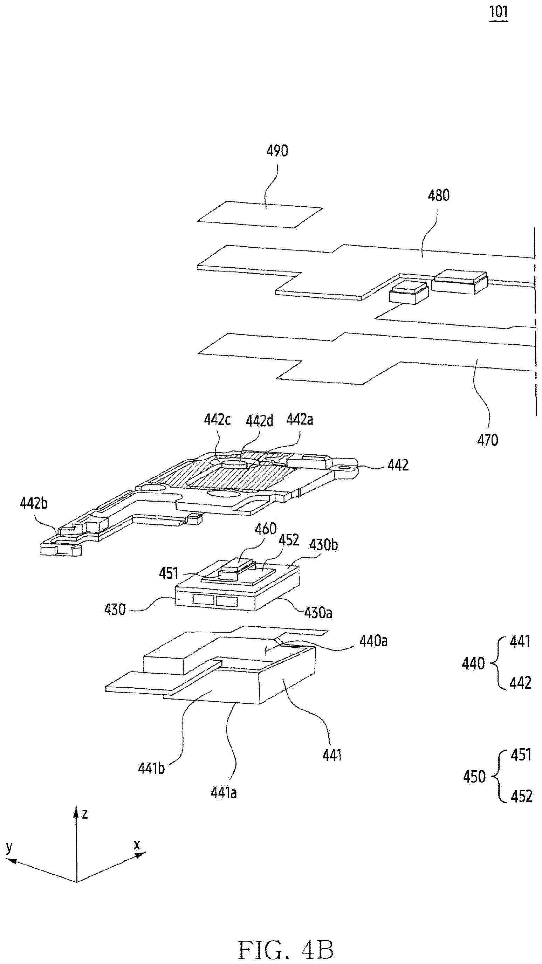

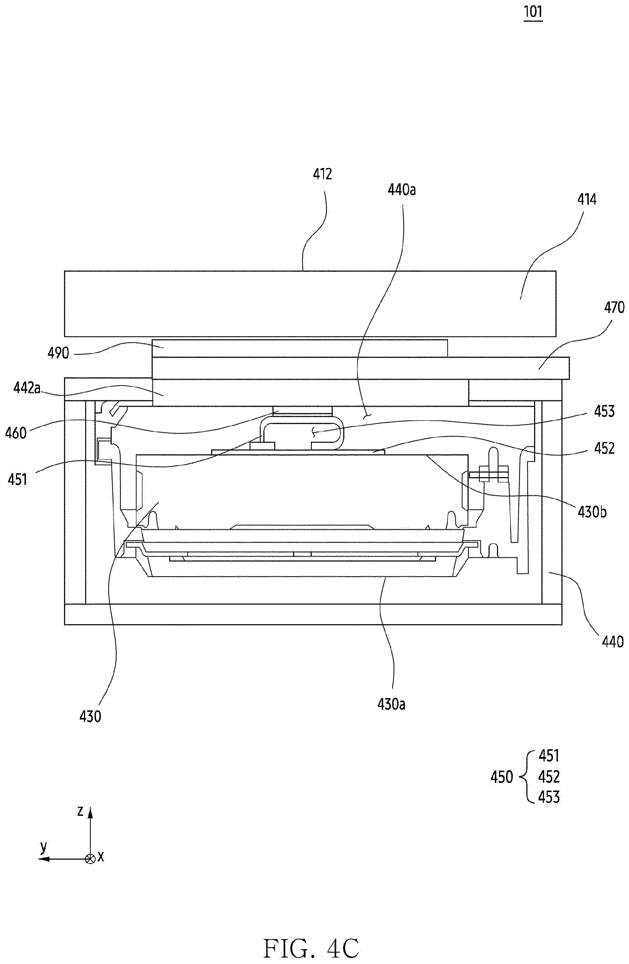

FIG. 4A is a perspective view of an example electronic device according to an embodiment (e.g., the electronic device 200 as illustrated in FIGS. 2 and 3), FIG. 4B is an exploded perspective view of an example electronic device according to an embodiment, and FIG. 4C is a cross-sectional view illustrating an example of an electronic device taken along a line A-A' of FIG. 4A according to an embodiment.

Referring to FIGS. 4A, 4B, and 4C, the electronic device 101 according to an embodiment may include a housing 410, a display 420 (e.g., the display 201 of FIG. 2), a speaker 430 (e.g., the audio module 170 of FIG. 1), an encloser 440, a supporting member 450, a first insulating member 460, a radiating member 470, an antenna module 480 (e.g., the antenna module 197 of FIG. 1), and/or a second insulating member 490.

The housing 410 may define at least a portion of the outer surface of the electronic device 101. The housing 410 may provide an internal space in which various electronic components in the electronic device 101 may be arranged. According to an embodiment, the housing 410 may include a first surface 411, a second surface 412 (e.g., the second surface 200B), and a third surface 413 (e.g., the third surface 200C). The first surface 411 may support the display 420. For example, the display 420 may be disposed on the first surface 411. For example, the first surface 411 may support a periphery of the display 420. The second surface 412 may be opposite to the first surface 411. For example, the direction (e.g., +z direction) in which the second surface 412 faces may be opposite to the direction (e.g., -z direction) in which the first surface 411 faces. According to an embodiment, the second surface 412 may be spaced apart from the first surface 411. For example, the second surface 412 may be spaced apart from the first surface 411 and may be substantially parallel to the first surface 411. The third surface 413 may connect the first surface 411 and the second surface 412. For example, the third surface 413 may connect a periphery of the first surface 411 and a periphery of the second surface 412. According to an embodiment, the third surface 413 may extend in between the first surface 411 and the second surface 412. For example, as the third surface 413 extends in between the first surface 411 and the second surface 412 spaced apart from each other, the third surface 413 may surround the first surface 411 and the second surface 412. For example, as the third surface 413 extends in between the first surface 411 and the second surface 412 spaced apart from each other, the third surface 413 may envelop the first surface 411 and the second surface 412.

According to an embodiment, the housing 410 may include a first plate (e.g., the front plate 202 of FIG. 3) and a second plate 414 (e.g., the rear plate 211 of FIG. 3). The first plate 202 may be disposed on the display 420. For example, the first plate 202 may be disposed on the display 420 to protect the display 420. The second plate 414 may define the second surface 412 of the housing 410. The second plate 414 may form the second surface 412. According to an embodiment, the second plate 414 may be spaced apart from the display 420 For example, the second plate 414 may be spaced apart from the display 420 by the third surface 413, which extends in between the first surface 411 and the second surface 412, thus also spacing apart the second plate 414 which may define the second surface 412 and the first plate 202 which may be disposed on the display 420.

According to an embodiment, the housing 410 may include at least one speaker hole 415. The at least one speaker hole 415 may connect an inside of the housing 410 and an outside of the housing 410. The at least one speaker hole 415 may transmit an audio output from the speaker 430 in the housing 410 to the outside of the housing 410. According to an embodiment, the at least one speaker hole 415 may be disposed on the third surface 413. For example, the at least one speaker hole 415 may penetrate the third surface 413 For example, the at least one speaker hole 415 may penetrate through the third surface 413 into the inside of the housing 410.

The display 420 may be configured to provide visual information. According to an embodiment, the display 420 may be disposed on the housing 410. For example, the display 420 may be attached on the first surface 411 of the housing 410. The display 420 may have a shape substantially parallel to the first surface 411.

The speaker 430 may be configured to provide audio for providing auditory information to a user. For example, the speaker 430 may be configured to emit the audio from the housing 410 toward the outside of the housing 410. For example, the speaker 430 may include a diaphragm, a coil, and/or a magnet for outputting audio. As current is applied to the coil in the speaker 430, the coil and the magnet may interact with each other. As the diaphragm vibrates in a designated frequency band due to the interaction between the coil and the magnet, air in the vicinity of the diaphragm may vibrate. Audio in the designated frequency band may be emitted from the speaker 430, owing to the vibration of air in the vicinity of the diaphragm.

According to an embodiment, the speaker 430 may be disposed in the housing 410. The audio emitted from the speaker 430 may be emitted out through the at least one speaker hole 415 of the housing 410. One surface 430a of the speaker 430 may face the first surface 411. One surface 430a of the spaker 430 may refer to rear surface of the speaker 430. For example, the direction (e.g., -z direction) in which one surface 430a of the speaker 430 faces may be substantially the same as the direction (e.g., -z direction) in which the first surface 411 faces. One surface 430a of the speaker 430 may be spaced apart from the first surface 411. One surface 430a of the speaker 430 may refer to an outer surface of the speaker 430 exposed to the outside of the speaker 430. For example., the one surface 430a of the speaker 430 may form an exterior surface of the speaker 430. According to an embodiment, the audio emitted from the speaker 430 may be emitted out through the one surface 430a of the speaker 430. For example, the diaphragm of the speaker 430 may be disposed on one surface 430a of the speaker 430. The other surface 430b of the speaker 430 may be opposite to the one surface 430a of the speaker 430. The other surface 430b of the spaker 430 may refer to front surface of the speaker 430. For example, the direction

(e.g., +z direction) in which the other surface 430b of the speaker 430 faces may be opposite to the direction (e.g., -z direction) in which the one surface 430a of the speaker 430 faces. The one surface 430a of the speaker 430 may be spaced apart from the other surface 430b of the speaker 430. The other surface 430b of the speaker 430 may refer to an outer surface of the speaker 430 opposite to the one surface 430a of the speaker 430. For example, the coil of the speaker 430 may be close to the other surface 430b of the speaker 430, amongst the one surface 430a of the speaker 430 and the other surface 430b of the speaker 430. According to an embodiment, the first surface 411 of the housing 410 may be close to the one surface 430a of the speaker 430, amongst the one surface 430a of the speaker 430 and the other surface 430b of the speaker 430. The second surface 412 of the housing 410 may be close to the other surface 430b of the speaker 430, among the one surface 430a of the speaker 430 and the other surface 430b of the speaker 430.

The encloser 440 may accommodate at least a portion of the speaker 430. For example, the encloser 440 may surround at least a portion of the speaker 430. For example, the encloser 440 may envelop at least a portion of the speaker 430. According to an embodiment, the encloser 440 may provide a resonance space 440a of the speaker 430. For example, the resonance space 440a may refer to an empty space inside the encloser 440 surrounding at least a portion of the speaker 430. The amplitude of the sound waves emitted from the speaker 430 may increase as the sound waves resonate in the resonance space 440a. According to an embodiment, the encloser 440 may include a first encloser 441 and a second encloser 442.

The first encloser 441 may surround at least a portion of the speaker 430. For example, the first encloser 441 may include a groove for receiving the speaker 430. For example, the first encloser 441 may envelop one surface 430a of the speaker 430. For example, at least a portion of the first encloser 441 may come into contact with the one surface 430a of the speaker 430. According to an embodiment, the first encloser 441 may include an audio hole (not shown) for transmitting audio emitted from the one surface 430a of the speaker 430 to the outside of the encloser 440. The audio transmitted to the outside of the encloser 440 through the audio hole may be transmitted to the outside of the housing 410 through at the least one speaker hole 415 of the housing 410. For example, the audio hole may be disposed on a bottom surface 441a of the first encloser 441 facing the first surface 411. The audio hole may pass through the bottom surface 441a of the first encloser 441. For example, the audio hole may be disposed on a side surface 441b of the first encloser 441 facing a direction (e.g., +x direction -x direction, +y direction, or -y direction) perpendicular to the direction (e.g., -z direction) facing the first surface 411. The audio hole may penetrate the side surface 441b of the first encloser 441. For example, the audio hole may penetrate through the side surface 441b of the first encloser 441 into the outside of the first encloser 441.

The second encloser 442 may be coupled to the first encloser 441. For example, as the second encloser 442 is coupled to the first encloser 441, the second encloser 442 may form the resonance space 440a together with the first encloser 441. According to an embodiment, the second encloser 442 may surround at least a portion of the speaker 430. For example, the second encloser 442 may surround the other surface 430b of the speaker 430. According to an embodiment, the second encloser 442 may be disposed on the other surface 430b of the speaker 430. For example, at least a portion of the second encloser 442 may be in contact with the other surface 430b of the speaker 430. According to an embodiment, the second encloser 442 may include a radiating portion 442a, a supporting portion 442b, a through hole 442c, and/or a sealing member 442d.

The radiating portion 442a may transfer heat emitted from the speaker 430 to the outside of the encloser 440. For example, when audio is output from the speaker 430 (and heat is generated), the radiating portion 442a may emit heat emitted through the other surface 430b of the speaker 430 to the outside of the encloser 440.For example, heat generated by the speaker is emitted through the other surface 430b and is absorbed and emitted by the radiating portion 442a to the outside of the encloser 440. For example, the radiating portion 442a may be made of a material having high thermal conductivity. The material having high thermal conductivity may include, although not limited to, a metallic material (e.g., stainless used steel (SUS) and/or clad metal). The clad metal may refer to a metal plate in which on one surface or both surfaces of a layer made of a metal or non-metal material is stacked a metal different from the material of the layer. According to an embodiment, the radiating portion 442a may be disposed on the other surface 430b of the speaker 430. The radiating portion 442a may face the other surface 430b of the speaker 430. The radiating portion 442a may be spaced apart from the other surface 430b of the speaker 430. For example, the radiating portion 442a may be spaced apart from the other surface 430b of the speaker 430 in a direction (e.g., +z direction) in which the other surface 430b of the speaker 430 faces. According to an embodiment, an area of the radiating portion 442a may be smaller than the area of the other surface 430b of the speaker 430. However, the disclosure is not limited thereto, and the area of the radiating portion 442a may be greater than or equal to the area of the other surface 430b of the speaker 430b.

The supporting portion 442b may be configured to support the radiating portion 442a. According to an embodiment, the supporting portion 442b may be connected to the radiating portion 442a. For example, the supporting portion 442b may surround at least a portion of the radiating portion 442a. For example, the supporting portion 442b may surround a periphery of the radiating portion 442a. According to an embodiment, the supporting portion 442b may include a material different from that of the radiating portion 442a. For example, the supporting portion 442b may be made of a material different from that of the radiating portion 442a. For example, the supporting portion 442a may be an injection product manufactured by an injection process utilizing a molten resin, but is not limited thereto. According to an embodiment, the thickness of the supporting portion 442b may be thicker than that of the radiating portion 442a. The thickness of a component may refer to a distance in the direction (e.g., +z direction) in which the other surface 430b of the speaker 430 faces, and the corresponding expression may be utilized in the same manner as in the following description, unless otherwise stated.

The through hole 442c may connect the outside of the encloser 440 and the inside of the encloser 440. For example, the through hole 442c may be formed to penetrate the radiating portion 442a. For example, the through hole 442c may extend from an inner surface of the second encloser 442 facing the other surface 430b of the speaker 430 toward an outer surface of the second encloser 442 opposite to the inner surface of the second encloser 442.

The sealing member 442d may seal the through hole 442c. For example, the sealing member 442d may inhibit an inflow of moisture through the through hole 442c. For example, the sealing member 442d may allow an inflow of gas through the through hole 442c. According to an embodiment, the sealing member 442d may be disposed on the through hole 442c. For example, the sealing member 442d may be disposed on an edge of the through hole 442c.

The supporting member 450 may be formed to separate the speaker 430 from the radiating portion 442a. The supporting member 450 may be disposed between the speaker 430 and the radiating portion 442a. For example, the supporting member 450 may be formed to separate the radiating portion 442a facing the other surface 430b of the speaker 430 from the other surface 430b of the speaker 430. For example, the supporting member 450 may be disposed between the radiating portion 442a and the other surface 430b of the speaker 430. According to an embodiment, the supporting member 450 may be disposed on the other surface 430b of the speaker 430. For example, when the speaker 430 outputs audio, heat may be generated from a coil in the speaker 430. The heat generated by the coil of the speaker 430 may be released through the other surface 430b of the speaker 430. When the speaker 430 outputs the audio, more heat may be emitted through the other surface 430b of the speaker 430 for a relatively shorter time than other electronic components in the electronic device 101. In the case that the other surface 430b of the speaker 430 and the radiating portion 442a come into contact with each other, the heat emitted from the speaker 430 for a relatively short time may be transferred to other components in the electronic device 101. The electronic device 101 according to an embodiment may provide a structure of delaying the transfer of heat emitted through the other surface 430b of the speaker 430 to the radiating portion 442a, by the supporting member 450 disposed between the other surface 430b of the speaker 430 and the radiating portion 442a. As the transfer of heat from the other surface 430b of the speaker 430 to the radiating portion 442a is delayed, the supporting member 450 can also reduce the transfer of heat from the speaker 430 to other electronic components of the electronic device 101. According to an embodiment, the speaker 430 may be made of a metal material (e.g., stainless used steel (SUS)), but the disclosure is not limited thereto. According to an embodiment, the supporting member 450 may include a first portion 451, a second portion 452, and/or a resonance hole 453.

The first portion 451 may be come into contact with the heat insulating member 460. According to an embodiment, the first portion 451 may be spaced apart from the other surface 430b of the speaker 430. The first portion 451 may face the radiating portion 442a of the second encloser 442. According to an embodiment, the first portion 451 may have a curved shape with a curvature. For example, the first portion 451 may be formed to be bent with respect to the second portion 452 on the other surface 430b of the speaker 430. For example, the first portion 451 may be formed to be bent such that at least a part of the first portion 451 is in contact with the other surface 430b of the speaker 430, forming the resonance hole 453.

The second portion 452 may be in contact with the other surface 430b of the speaker 430. For example, the second portion 452 may be substantially parallel to the other surface 430b of the speaker 430. According to an embodiment, the area of the second portion 452 may be smaller than that of the other surface 430b of the speaker 430. As the area of the second portion 452 is smaller than the area of the other surface 430b of the speaker 430, the transfer of heat emitted from the other surface 430b of the speaker 430 to the radiating portion 442a may be delayed. According to an embodiment, the first portion 451 and the second portion 452 may be integrally formed. For example, the first portion 451 and the second portion 452 may be made of the same material as each other. However, the disclosure is not limited thereto, and the first portion 451 and the second portion 452 may be made of different materials from each other.

The resonance hole 453 may be configured to resonate audio output from the speaker 430. For example, the resonance hole 453 may be connected to the inner space 440a of the encloser 440. As the resonance hole 453 is connected to the inner space 440a of the encloser 440, the size of the space for resonance of the speaker 430 may be enlarged compared to the case where the resonance hole 453 is not connected to the inner space 440a of the encloser 440. According to an embodiment, the resonance hole 453 may penetrate the supporting member 450. For example, the resonance hole 453 may be disposed between the first portion 451 and the second portion 452. For example, the resonance hole 453 may be surrounded by the first portion 451.

When the audio is output, the first insulating member 460 can reduce the heat from the speaker 430 transmitted to the radiating portion 442a. For example, the first insulating member 460 may be formed to face the radiating portion 442a. The first insulating member 460 can reduce the heat transferred to the radiating member 470 when the audio is output. For example, the first insulating member 460 may be arranged to face the radiating member 470. According to an embodiment, the first insulating member 460 may have low thermal conductivity. For example, the thermal conductivity of the first insulating member 460 in the direction (e.g., +z direction) in which the other surface 430b of the speaker 430 faces may be substantially 0.02 W/(m*k) or less. For example, the thermal conductivity of the first insulating member 460 in the direction (e.g., +z direction) in which the other surface 430b of the speaker 430 faces may be substantially 0.03 to 0.1 W/(m*k). According to an embodiment, the first insulating member 460 may be disposed between the radiating portion 442a and the supporting member 450. For example, the first insulating member 460 may be in contact with a portion of the radiating portion 442a. For example, the first insulating member 460 may be attached to a portion of the radiating portion 442a. According to an embodiment, the first insulating member 460 may be disposed on the supporting member 450. For example, the first insulating member 460 may be in contact with the supporting member 450. For example, the first insulating member 460 may be in contact with the first portion 451 of the supporting member 450. The heat generated from the speaker 430 when the audio is output may be transferred to the radiating portion 442a after it moves along the supporting member 450. For example, in the case of the first insulating member 460 being omitted, the amount of heat per unit time transferred from the first portion 451 of the supporting member 450 to the radiating portion 442a may increase compared to when the first insulating member 460 is disposed between the first portion 451 and the radiating portion 442a. Since the speaker 430 emits a large amount of heat for a relatively short time when the audio is output, the amount of heat per unit time transferred to other electronic components in the electronic device 101 may increase as the amount of heat per unit time transferred from the first portion 451 of the supporting member 450 to the radiating portion 442a increases. In the case that the amount of heat per unit time transferred to other electronic components in the electronic device 101 increases, damage to other electronic components in the electronic device 101 may increase. Thus, the electronic device 101 according to an embodiment can provide the structure that reduces the transfer of heat emitted from the speaker 430 to other electronic components in the electronic device 101, by means of the first insulating member 460 arranged between the supporting member 450 and the radiating portion 442a.

According to an embodiment, the first insulating member 460 may be deformable. For example, when the speaker 430 outputs audio, vibration may be generated from the speaker 430. The first insulating member 460 may be deformable by the vibration generated from the speaker 430 when the audio is output. For example, the first insulating member 460 may be compressed or stretched by the vibration generated from the speaker 430. For example, the first insulating member 460 may have a sponge form including a material with low thermal conductivity, but the disclosure is not limited thereto. In the case of the first insulating member 460 being not deformable, the first insulating member 460 may be damaged by the vibration generated from the speaker 430. Since the first insulating member 460 is deformable, the electronic device 101 according to an embodiment can provide the structure that may reduce or alleviate damage to the first insulating member 460 due to the vibration generated from the speaker 430.

According to an embodiment, the cross-sectional area of the first insulating member 460 may be smaller than the cross-sectional area of the supporting member 450. For example, when the first insulating member 460 is viewed in the direction (e.g., -z direction) in which one surface 430a of the speaker 430 faces, the size of the first radiating member 450 may be smaller than that of the supporting member 450. For example, the cross-sectional area of the first insulating member 460 may be smaller than that of the second portion 452 of the supporting member 450. According to an embodiment, the size of the first insulating member 460 may be smaller than the size of the radiating portion 442a. For example, the cross-sectional area of the first insulating member 460 may be smaller than the size of the radiating portion 442a. For example, when the size of the first insulating member 460 corresponds to the size of the radiating portion 442a, the amount of heat emitted to the outside of the encloser 440 through the other surface 430a of the speaker 430 may be excessively reduced. When the amount of heat emitted to the outside of the encloser 440 is excessively reduced, the temperature within the encloser 440 may excessively increase. Since the size of the first insulating member 460 is smaller than the size of the radiating portion 442a, the electronic device 101 according to an embodiment can provide the structure capable of reducing or alleviating damage to the speaker 430 due to an excessive temperature rise in the encloser 440.

The radiating member 470 may transfer the heat emitted from the speaker 430 in a direction away from the speaker 430. The radiating member 470 may disperse the heat emitted from the speaker 430 into the housing 410. For example, the radiating member 470 may include a material (e.g., graphite) having high thermal conductivity, but the disclosure is not limited thereto. According to an embodiment, the radiating member 470 may be disposed on the radiating portion 442a. The radiating member 470 may be disposed between the radiating portion 442a and the second surface 412. For example, at least a portion of the radiating member 470 may be disposed between the radiating portion 442a and the second insulating member 490. For example, at least a portion of the radiating member 470 may be disposed between the other surface 430b of the speaker 430 and the second surface 412 of the housing 410. The radiating member 470 may face the other surface 430b of the speaker 430. According to an embodiment, a portion of the radiating member 470 may be disposed on the radiating portion 442a and may extend in a direction away from the radiating portion 442a (e.g., -y direction). A portion of the radiating member 470 may be in contact with the radiating portion 442a. The heat emitted from the speaker 430 may be transferred to the radiating member 470 through the radiating portion 442a. As the heat transferred from the radiating portion 442a to the radiating member 470 travels in the radiating member 470, the heat emitted from the speaker 430 may be dispersed into the housing 410.

Referring back to FIG. 4B, an antenna module 480 may be configured to receive an electrical signal from the outside of the electronic device 101. For example, the electronic device 101 may communicate with an external electronic device, based on receiving signals from the antenna module 480. For example, the electronic device 101 may charge a battery (e.g., the battery 189 of FIG. 1) based on receiving power from the antenna module 480. According to an embodiment, a portion of the antenna module 480 may be disposed between the second surface 412 of the housing 410 and the encloser 440. For example, a portion of the antenna module 480 may be disposed between the second surface 412 and the second encloser 442. According to an embodiment, the antenna module 480 may extend in a direction (e.g., -y direction) away from the encloser 440. For example, the size of the antenna module 480 may be greater than the size of the encloser 440. According to an embodiment, the radiating member 470 may be disposed in the antenna module 480. For example, the radiating member 470 may be one of a plurality of layers included in the antenna module 480, but the disclosure is not limited thereto. For example, the radiating member 470 may be a separate component distinguished from the antenna module 480. When the radiating member 470 and the antenna module 480 are distinguished from each other, the radiating member 470 may be disposed outside the antenna module 480.

The second insulating member 490 may reduce the heat transfer from the speaker 430 to the second surface 412 of the housing 410, when audio is output. For example, the second insulating member 490 may have low thermal conductivity. The thermal conductivity of the second insulating member 490 in the direction (e.g., +z direction) in which the other surface 430b of the speaker 430 faces may be substantially 0.02 W/(m*k) or less. For example, the thermal conductivity of the second insulating member 490 in the direction (e.g., +z direction) in which the other surface 430b of the speaker 430 faces may be substantially 0.03 to 0.1 W/(m*k). According to an embodiment, the second insulating member 490 may be in contact with the second plate 414 of the housing 410. For example, the second insulating member 490 may be in contact with the radiating member 470 and the second plate 414. The second insulating member 490 may be attached to the second plate 414. According to an embodiment, the second insulating member 490 may be disposed between the radiating portion 442a of the second encloser 442 and the second surface 412 of the housing 410. For example, the second insulating member 490 may be disposed between the second surface 412 and the radiating member 470. According to an embodiment, the cross-sectional area of the second insulating member 490 may be smaller than that of the radiating member 470. When the speaker 430 outputs audio, the heat from the speaker 430 may pass through the radiating portion 442a along the direction (e.g., +z direction) in which the other surface 430b of the speaker 430 faces. The heat from the speaker 430 passing through the radiating portion 442a may be transferred to the second surface 412 through the radiating member 470. When an excessive amount of heat is transferred to the second surface 412, the user may feel uncomfortable since the second surface 412 is close to the user's body. The electronic device 101 according to an embodiment can provide the structure capable of reducing or alleviating excessive heat transfer to the outside of the electronic device 101, by means of the second insulating member 490 disposed between the second surface 412 and the radiating member 470. For example, the second insulating member 490 can reduce the transfer of heat travelling to the second surface 412 along the direction (e.g., +z direction) in which the other surface 430b of the speaker 430 faces. The heat emitted from the speaker 430 may be dispersed within the housing 410, as it travels in the direction (e.g., -y direction) perpendicular to the direction in which the other surface 430b of the speaker 430 faces, by the radiating portion 442a and/or the radiating member 470.

According to an embodiment, the second insulating member 490 may be deformable. The second insulating member 490 may buffer an impact from the outside of the electronic device 101. For example, the second insulating member 490 may be compressed or stretched by an impact from the outside of the electronic device 101. For example, the second insulating member 490 may have a sponge shape including a material having low thermal conductivity, but it is not limited thereto. In the case that the second insulating member 490 is not deformable, the second insulating member 490 may be damaged by an impact transmitted from the outside of the electronic device 101. Since the second insulating member 490 is deformable, the electronic device 101 according to an embodiment can provide the structure capable of reducing or alleviating damage to the second insulating member 490 due to an impact from the outside of the electronic device 101.

As described above, the electronic device 101 according to an embodiment can provide the structure capable of delaying the movement of heat moving along the direction (e.g., +z direction) toward the other surface 430b of the speaker 430, by means of the first insulating member 460 disposed on the other surface 430b of the speaker 430. The electronic device 101 according to an embodiment can provide the structure capable of delaying the movement of heat travelling along the direction (e.g., +z direction) facing the second surface 412 disposed between the second surface 412 and the radiating member 470.

To dissipate the heat emitted from the speaker to the outside of the speaker, the electronic device may include a radiating member for radiating the heat emitted from the speaker. The speaker may emit a large amount of heat for a relatively short time duration compared to other electronic components included in the electronic device. When such a large amount of heat is emitted for a relatively short time duration, the heat transferred to the radiating member may be transferred to other electronic components in the electronic device. In order to reduce the transfer of heat to other electronic components in the electronic device, the electronic device may need a structure for insulating some of the heat emitted from the speaker.

There follows a description of various embodiments and examples of the present disclosure. It will be appreciated that each and every combination of these various embodiments and examples is envisaged and so should be seen as disclosed herein.

An electronic device (e.g., the electronic device 101 of FIGS. 4A, 4B, and 4C) according to an embodiment may include a display (e.g., the display 420 of FIG. 4A). According to an embodiment, the electronic device may include a housing (e.g., the housing 410 of FIG. 4A) including a first surface (e.g., the first surface 411 of FIG. 4A) supporting the display and a second surface (e.g., the second surface 412 of FIGS. 4A and 4C) opposite to the first surface. According to an embodiment, the electronic device may include a speaker (e.g., the speaker 430 of FIGS. 4B and 4C) including one surface (e.g., one surface 430a of FIGS. 4B and 4C) facing the first surface and other surface (e.g., the other surface 430b of FIGS. 4B and 4C) facing the second surface and configured to output audio toward the one surface in the housing. According to an embodiment, the electronic device may include an encloser (e.g., the encloser 440 of FIGS. 4B and 4C) including a radiating portion (e.g., the radiating portion 442a of FIGS. 4B and 4C) facing the other surface of the speaker and configured to accommodate the speaker. According to an embodiment, the electronic device may include a first insulating member (e.g., the first insulating member 460 of FIGS. 4B and 4C) attached to a portion of the radiating portion to reduce heat from the speaker transferred to the radiating portion when the audio is output. According to an embodiment, the electronic device may include a supporting member (e.g., the supporting member 450 of FIGS. 4B and 4C) including a first portion (e.g., the first portion 451 of FIGS. 4B and 4C) in contact with the first insulating member and a second portion (e.g., the second portion 452 of FIGS. 4B and 4C) in contact with the other surface of the speaker and configured to separate the radiating portion from the other surface of the speaker. According to an embodiment, the electronic device may include a second insulating member (e.g., the second insulating member 490 of FIGS. 4B and 4C) disposed between the radiating portion and the second surface to reduce the heat transferred to the second surface, when the audio is output.

The electronic device according to an embodiment can provide the structure capable of delaying the movement of heat from the speaker, by the first insulating member disposed between the supporting member and the radiating portion of the encloser. The electronic device according to an embodiment can provide the structure capable of delaying the movement of heat from the speaker, by the second insulating member disposed between the second surface and the radiating portion.

According to an embodiment, when the first insulating member is viewed in a direction in which the one surface of the speaker faces, the size of the first insulating member may be smaller than the size of the supporting member.

An electronic device according to an embodiment can provide the structure capable of reducing or alleviating an excessive increase in the temperature of the speaker, because the size of the first insulating member is smaller than the size of the supporting member.

According to an embodiment, the first insulating member may be deformable by vibration generated from the speaker when the audio is output.

An electronic device according to an embodiment can provide the structure capable of reducing or alleviating damage to the first insulating member due to vibration generated from the speaker, by the deformable first insulating member.

According to an embodiment, the area of the first insulating member may be smaller than the area of the second portion.

An electronic device according to an embodiment can provide the structure capable of reducing or alleviating an excessive increase in temperature of the speaker, since the area of the first insulating member is smaller than the area of the second portion of the first radiating member.

According to an embodiment, the second insulating member may be deformable.

An electronic device according to an embodiment can provide the structure capable of reducing or alleviating damage to the second insulating member due to an impact transferred from the second surface, by the deformable second insulating member.

According to an embodiment, the supporting member may include a resonance hole (e.g., the resonance hole 453 in FIGS. 4B and 4C) configured to penetrate the supporting member and resonate the audio output from the speaker.

An electronic device according to an embodiment can provide the structure capable of securing a space for resonating audio output from a speaker, by means of a supporting member including a resonance hole.

According to an embodiment, the encloser may include a resonance space (e.g., the resonance space 440a of FIGS. 4B and 4C) surrounding at least a portion of the speaker, the resonance space being connected to the resonance hole, and configured to resonate the audio output from the speaker.

An electronic device according to an embodiment can provide the structure capable of resonating audio output from the speaker, by an encloser including the resonance space.

According to an embodiment, the electronic device may include a radiating member (e.g., the radiating member 470 of FIGS. 4B and 4C) disposed between the radiating portion and the second insulating member.

An electronic device according to an embodiment can provide the structure capable of dispersing the heat from a speaker into the housing, by the radiating member disposed between the radiating portion and the second insulating member.

According to an embodiment, the electronic device may include an antenna module (e.g., the antenna module 480 of FIGS. 4B and 4C) configured to receive a signal from the outside of the electronic device, a portion of the antenna module being disposed between the second surface and the encloser. According to an embodiment, the radiating member may extend in the antenna module.

An electronic device according to an embodiment can provide the structure capable of dispersing the heat from the speaker into the housing, by the radiating member extending in the antenna module.

According to an embodiment, the radiating portion may include a through hole (e.g., the through hole 442c of FIG. 4B) penetrating the radiating portion.

An electronic device according to an embodiment can provide the structure capable of introducing air into or out of the encloser, by the through hole penetrating the radiating portion.

According to an embodiment, the radiating portion may include a sealing member (e.g., the sealing member 442d of FIG. 4B) disposed on the through hole.

An electronic device according to an embodiment can provide the structure capable of reducing or alleviating the inflow of foreign substances into the encloser, by the sealing member disposed on the through hole.

According to an embodiment, the encloser may include a first encloser (e.g., the first encloser 441 of FIG. 4B) configured to support the radiating portion. According to an embodiment, the encloser may include a second encloser (e.g., the second encloser 442 of FIG. 4B) coupled to the first encloser. According to an embodiment, the speaker may be surrounded by the first encloser and the second encloser.

An electronic device according to an embodiment can provide the structure capable of securing the resonance space of the speaker, by a first encloser and a second encloser coupled to each other.

According to an embodiment, the first encloser may include a supporting portion (e.g., the supporting portion 442b of FIG. 4B) connected to the radiating portion and including a material different from the radiating portion.

An electronic device according to an embodiment can provide the structure capable of securing the resonance space of the speaker, by the supporting portion connected to the radiating portion.

According to an embodiment, the electronic device may include a first plate (e.g., the front plate 202 of FIG. 3) disposed on the display. According to an embodiment, the electronic device may include a second plate (e.g., the second plate 414 of FIGS. 4B and 4C) forming the second surface and being in contact with the second insulating member.

The electronic device according to an embodiment can provide the structure capable of delaying the movement of heat transferred from the speaker from the second surface, by the second insulating member being in contact with the second plate.

An electronic device (e.g., the electronic device 101 of FIGS. 4A, 4B, and 4C) according to an embodiment may include a display (e.g., the display 420 of FIG. 4A). According to an embodiment, the electronic device may include a housing (e.g., the housing 410 of FIG. 4A) including a first surface (e.g., the first surface 411 of FIG. 4A) supporting the display and a second surface (e.g., the second surface 412 of FIGS. 4A and 4C) opposite to the first surface. According to an embodiment, the electronic device may include a speaker (e.g., the speaker 430 of FIGS. 4B and 4C) including one surface (e.g., one surface 430a of FIGS. 4B and 4C) facing the first surface and another surface (e.g., the other surface 430b of FIGS. 4B and 4C) facing the second surface and configured to output audio toward the one surface in the housing. According to an embodiment, the electronic device may include a radiating member (e.g., the radiating member 470 of FIGS. 4B and 4C) spaced apart from the other surface of the speaker, at least a portion of the radiating member being disposed between the other surface of the speaker and the second surface. According to an embodiment, the electronic device may include a supporting member (e.g., the supporting member 450 of FIGS. 4B and 4C) disposed on the other surface of the speaker and including a resonance hole (e.g., the resonance hole 453 of FIGS. 4B and 4C) configured to resonate audio output from the speaker. According to an embodiment, the electronic device may include a first insulating member (e.g., the first insulating member 460 of FIGS. 4B and 4C) disposed on the supporting member to reduce the heat transferred from the speaker to the radiating member when the audio is output, the first insulating member facing a portion of the radiating member. According to an embodiment, the electronic device may include a second insulating member (e.g., the second insulating member 490 of FIGS. 4B and 4C) disposed between the second surface and the radiating member to reduce the heat transferred from the speaker to the second surface when the audio is output.

According to an embodiment, when the first insulating member is viewed in a direction in which the one surface of the speaker faces, a size of the first insulating member may be smaller than a size of the supporting member.

According to an embodiment, the first insulating member may be deformable by vibration generated from the speaker when the audio is output.

According to an embodiment, an area of the first radiating member may be smaller than an area of the second portion.

According to an embodiment, the second insulating member may be deformable.

According to an embodiment, the electronic device may include an antenna module (e.g., the antenna module 480 of FIGS. 4B and 4C) configured to receive a signal from the outside of the electronic device, a portion of the antenna module being disposed between the second surface and the encloser. According to an embodiment, the radiating member may extend in the antenna module.

According to an aspect of the present disclosure there is provided an electronic device comprising: a display; a housing including a first surface supporting the display and a second surface opposite to the first surface; a speaker including rear surface facing the first surface and the a front surface facing the second surface, and wherein the speaker is configured to output audio toward the rear surface in the housing; an encloser including a radiating portion facing the front surface of the speaker and configured to accommodate at least a portion of the speaker; a first insulating member in contact with a part of the radiating portion to reduce heat from the speaker transferred to the radiating portion when the audio is output; and a supporting member including a first portion in contact with the first insulating member and a second portion in contact with the front surface of the speaker and disposed between the front surface of the speaker and the radiating portion.

According to an embodiment, when the first insulating member is viewed in a direction in which the rear surface of the speaker faces, a size of the first insulating member is smaller than a size of the supporting member.

According to an embodiment, the first insulating member is deformable by vibration from the speaker when the audio is output.

According to an embodiment, an area of the first insulating member is smaller than an area of the second portion.

According to an embodiment, the electronic device further comprises a second insulating member disposed between the second surface and the radiating portion to reduce the heat transferred to the second surface when the audio is output.

According to an embodiment, the second insulating member is deformable; and wherein the second insulating member buffers impacts from an outside of the electronic device..

According to an embodiment, wherein the supporting member further includes a resonance hole penetrating the supporting member and configured to resonate the audio output from the speaker.

According to an embodiment, the encloser further includes a resonance space surrounding at least part of the speaker, connected to the resonance hole, and configured to resonate the audio output from the speaker.

According to an embodiment, the electronic device further comprises a radiating member disposed between the second surface and the radiating portion.

According to an embodiment, the electronic device further comprises an antenna module configured to receive a signal from the outside of the electronic device, a part of the antenna module being disposed between the second surface and the encloser wherein the radiating member extends in the antenna module.

According to an embodiment, the radiating portion includes a through hole penetrating the radiating portion.

According to an embodiment, the radiating portion further includes a sealing member disposed on the penetrating hole; and wherein the sealing member allows an inflow of gas through the through hole and inhibits an inflow of moisture through the through hole.

According to an embodiment, the encloser further includes: a first encloser (441) configured to supporting the radiating portion; and a second encloser coupled to the first encloser; wherein at least part of the speaker is surrounded by the first encloser and the second encloser.

According to an embodiment, the first encloser includes a supporting portion including made of a different material from to the radiating portion and connected to the radiating portion.

According to an embodiment, the housing further includes: a third surface connecting the first surface and the second surface; and at least one speaker hole penetrating the third surface and configured to emit transmit the audio output from the speaker to the outside of the electronic device.

According to an aspect of the present disclosure there is provided an electronic device comprising: a display; a housing including a first surface supporting the display and a second surface opposite to the first surface; a speaker including rear surface facing the first surface and the front surface facing the second surface, and wherein the speaker is configured to output audio toward the rear surface in the housing; a radiating member spaced apart from the front surface of the speaker, at least part of the radiating member being disposed between the second surface and the front surface of the speaker ; a supporting member disposed on the front surface of the speaker and including a resonance hole configured to resonate audio output from the speaker; a first insulating member facing a part of the radiating member and disposed on the supporting member to reduce heat from the speaker transferred to the radiating member when the audio is output; and a second insulating member disposed between the second surface and the radiating member to reduce heat from the speaker transferred to the second surface when the audio is output.

According to an embodiment, when the first insulating member is viewed in a direction in which the rear surface of the speaker faces, a size of the first insulating member is smaller than a size of the supporting member.

According to an embodiment, the first insulating member is deformable by vibration generated from the speaker when the audio is output; and wherein the second insulating member buffers impacts from an outside of the electronic device.

According to an embodiment, the electronic device further comprises an antenna module configured to receive a signal from the outside of the electronic device, a part of the antenna module being disposed between the second surface and the speaker, and wherein the radiating member is disposed in the antenna module.

The electronic device according to various embodiments disclosed herein may be one of various types of electronic devices. The electronic devices may include, for example, a portable communication device (e.g., a smartphone), a computer device, a portable multimedia device, a portable medical device, a camera, a wearable device, or a home appliance. According to an example, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd" or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may be interchangeably used with other terms, for example, "logic", "logic block", "part", or "circuitry". A module may be a single integral component, or a minimum unit or part thereof, adapted to perform one or more functions. For example, according to an example, the module may be implemented in a form of an application-specific integrated circuit (ASIC).

Various embodiments as set forth herein may be implemented as software (e.g., a program 140) including one or more instructions that are stored in a storage medium (e.g., an internal memory 136 or an external memory 138) that is readable by a machine (e.g., an electronic device 101). For example, a processor (e.g., a processor 120 of an electronic device 101) of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an example, a method according to various embodiments of the disclosure may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments of the disclosure, each component (e.g., a module or a program) of the above-described components may include a single entity or multiple entities, and some of the multiple entities may be separately disposed in different components. According to various embodiments of the disclosure, one or more of the above-described components may be omitted, or one or more other components may be added. Alternatively or additionally, a plurality of components (e.g., modules or programs) may be integrated into a single component. In such a case, according to various embodiments of the disclosure, the integrated component may still perform one or more functions of each of the plurality of components in the same or similar manner as they are performed by a corresponding one of the plurality of components before the integration. According to various embodiments of the disclosure, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 200) comprising:
a display (420);
a housing including a first surface (411) supporting the display (420) and a second surface (412) opposite to the first surface (411);
a speaker (430) including one surface (430a) facing the first surface (411) and the other surface (430b) facing the second surface (412), wherein the speaker (430) is configured to output audio toward the one surface(430a) in the housing (410);
an encloser (440) including a radiating portion (442a) facing the other surface (430b) of the speaker (430) and configured to accommodate at least a portion of the speaker (430);
a first insulating member (460) in contact with a part of the radiating portion (442a) to reduce heat from the speaker (430) transferred to the radiating portion (442a) when the audio is output; and
a supporting member (450) including a first portion (451) in contact with the first insulating member and a second portion (452) in contact with the other surface (430b) of the speaker (430) and disposed between the other surface (430b) of the speaker (430) and the radiating portion (442a).

2. The electronic device (101; 200) according to claim 1, wherein, when the first insulating member (460) is viewed in a direction in which the one surface (430a) of the speaker (430) faces, a size of the first insulating member (460) is smaller than a size of the supporting member (450).

3. The electronic device (101; 200) according to any one of claims 1 to 2, wherein the first insulating member (460) is deformable by vibration from the speaker when the audio is output.

4. The electronic device (101; 200) according to any one of claims 1 to 3, wherein an area of the first insulating member is smaller than an area of the second portion.

5. The electronic device (101; 200) according to any one of claims 1 to 4, further comprising a second insulating member (490) disposed between the second surface (412) and the radiating portion (442a) to reduce the heat transferred to the second surface (412) when the audio is output.

6. The electronic device (101; 200) according to any one of claims 1 to 5, wherein the second insulating member (490) is deformable.

7. The electronic device (101; 200) according to any one of claims 1 to 6, wherein the supporting member (450) further includes a resonance hole (453) penetrating the supporting member and configured to resonate the audio output from the speaker (430).

8. The electronic device (101; 200) according to any one of claims 1 to 7, wherein the encloser (440) further includes a resonance space (440a) surrounding at least part of the speaker (430), connected to the resonance hole (453), and configured to resonate the audio output from the speaker (430).

9. The electronic device (101; 200) according to any one of claims 1 to 8, further comprising a radiating member (470) disposed between the second surface (412) and the radiating portion (442a).

10. The electronic device (101; 200) according to any one of claims 1 to 9, further comprising an antenna module (480) configured to receive a signal from the outside of the electronic device (101; 200), a part of the antenna module being disposed between the second surface (412) and the encloser (440),
wherein the radiating member extends in the antenna module.

11. The electronic device (101; 200) according to any one of claims 1 to 10, wherein the radiating portion (442a) includes a through hole (442c) penetrating the radiating portion (442a).

12. The electronic device (101; 200) according to any one of claims 1 to 11, wherein the radiating portion (442a) further includes a sealing member (442d) disposed on the penetrating hole (442c).

13. The electronic device (101; 200) according to any one of claims 1 to 12,
wherein the encloser (440) further includes:
a first encloser (441) configured to support the radiating portion (442a); and
a second encloser (442) coupled to the first encloser (441);
wherein at least part of the speaker (430) is surrounded by the first encloser (441) and the second encloser (442).

14. The electronic device (101; 200) according to any one of claims 1 to 13, wherein the first encloser (441) includes a supporting portion (442b) including a different material from the radiating portion (442a) and connected to the radiating portion (442a).

15. The electronic device (101; 200) according to any one of claims 1 to 14,
wherein the housing (410) further includes:
a third surface (413) connecting the first surface (411) and the second surface (411); and
at least one speaker hole (415) penetrating the third surface (413) and configured to transmit the audio output from the speaker (430) to the outside of the electronic device (101; 200).
